(19) Europäisches Patentamt
European Patent Office
Office européen des brevets

(11) Veröffentlichungsnummer: **0 160 877**
**B1**

(12) # EUROPÄISCHE PATENTSCHRIFT

(45) Veröffentlichungstag der Patentschrift: **22.11.90**

(51) Int. Cl.$^5$: **G 11 B 5/706,** H 01 F 1/11

(21) Anmeldenummer: **85104855.3**

(22) Anmeldetag: **22.04.85**

(54) **Verfahren zur Herstellung von feinteiligem isotropem kobalthaltigem Ferritpulver.**

(30) Priorität: **09.05.84 DE 3416988**

(43) Veröffentlichungstag der Anmeldung:
**13.11.85 Patentblatt 85/46**

(45) Bekanntmachung des Hinweises auf die Patenterteilung:
**22.11.90 Patentblatt 90/47**

(84) Benannte Vertragsstaaten:
**DE FR GB NL**

(56) Entgegenhaltungen:
**US-A-3 822 210**

**JOURNAL OF MAGNETISM AND MAGNETIC MATERIALS Bände 15-18, 1980, Seiten 1117, 1118; R.E. VANDENBERGHE et al.: "Preparation and magnetic properties of ultra-fine cobalt ferrites"**

**REVIEW OF THE ELECTRICAL COMMUNICATION LABORATORY, Band 11, Nr. 1-2, Januar/Februar 1963, Seiten 26-36; T. SATO et al.: "Formation of ultra fine spinel ferrite"**

(73) Patentinhaber: **BASF Aktiengesellschaft
Carl-Bosch-Strasse 38
D-6700 Ludwigshafen (DE)**

(72) Erfinder: **Hibst, Hartmut, Dr.
Sternstrasse 215
D-6700 Ludwigshafen (DE)**
Erfinder: **Jakusch, Helmut, Dr.
Lorscher Ring 6 c
D-6700 Frankenthal (DE)**

(56) Entgegenhaltungen:
**JOURNAL OF APPLIED PHYSICS Anhang zu Band 32, Nr. 3, März 1961, Seiten 235S, 236S; W.J. SCHUELE et al.: "Preparation, growth, and study of ultrafine ferrite particles"**

**EP 0 160 877 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zur Herstellung von feinteiligem kobalhaltigem Ferritpulver der allgemeinen Formel

$$Co_xFe_{3-x}O_{4,5-0,5x}$$

mit Werten für x zwischen größer Null und kleiner 1, mit im wesentlichen isotroper Teilchenform durch trockene Oxidation von Ferritpulver der Zusammensetzung

$$(Fe^{III})[Co_xFe^{II}_{1-x}Fe^{III}]O_4$$

mit den gleichen Grenzen für x mit sauerstoffhaltigen Gasen bei 150 bis 500°C.

Es ist bekannt, daß sich die Koerzitivfeldstärke von isotropen Ferritpulver mit steigendem Kobalt-Gehalt x erhöht. Damit ist die Koerzitivfeldstärke eines Ferritpigments über den Kobalt-Gehalt einstellbar. Weiter ist bekannt, daß bei der trockenen Oxidation der kobalthaltigen Magnetitpulver der Zusammensetzung

$$Co_xFe_{3-x}O_4 \equiv [Co(II)_xFe(II)_{1-x}Fe(III)_2O_4](0<x<1)$$

zu kobalthaltigem γ-Fe(III)-Oxid der Zusammensetzung

$$Co_xFe_{3-x}O_{4,5-0,5x} = [Co_x(II)Fe_{3-x}(III)O_{4,5-0,5x}](0<x\leq 1)$$

ein Anstieg der Koerzitivfeldstärke, ein Anstieg der spezifischen remanente Magnetisierung, ein Anstieg der relativen Remanenz $m_r=M_r/M_s$ und eine Erniedrigung der Schaltfeldverteilung erfolgt. Der Pigmentteilchendurchmesser, die spezifische BET-Oberfläche und die isotrope Teilchenform bleibt jedoch bei der trockenen Oxidation nahezu unverändert erhalten.

Ferritpulver der Zusammensetzung

$$Co_xFe_{3-x}O_{4,5-0,5x}$$

sind für die Herstellung von magnetischen Informationsspeichermedien von Interesse, insbesondere für die Herstellung von isotropen magnetischen Medien für eine kombinierte Longitudinal-Vertikalaufzeichnung Die dazu erforderlichen Magnetteilchen müssen ein gute Dispergierbarkeit, eine hohe spezifische remanente Magnetisierung, eine hohe relative Remanenz $m_r=M_r/M_s$, eine geringe Schaltfeldverteilung, eine geringe Temperaturabhängigkeit der Magnetwerte, eine geringe Magnetostriktion, ein enges Teilchengrößenspektrum und eine sehr hohe Feinteiligkeit besitzen.

Kobalthaltige Magnetite der Zusammensetzung

$$Co_xFe_{3-x}O_4(0<x<1)$$

können auf naßchemischem Wege nach zwei verschiedenen Verfahren hergestellt werden.

Beim Neutralisationsverfahren wird von einer Mischfällung mit einem definierten pH-Wert von 11—13 ausgegangen. Die Mischfällung wird durch Zusammengeben einer wäßrigen Alkalihydroxidlösung, einer Co-Salzlösung, einer Fe(II)-Salzlösung und einer Fe(III)-Salzlösung hergestellt. Beim Erhitzen der Mischfällung unter einem nichtoxidierenden Schutzgas, beispielsweise Steickstoff oder Argon, fällt extrem feinteiliger Co-dotierter Magnetit der Zusammensetzung

$$Co_xFe_{3-x}O_4 \equiv [Co(II)_xFe(II)_{1-x}Fe(III)_2O_4](0<x<1)$$

mit isotroper Teilchenform an. Das Neutralisationsverfahren ist zum einen dadurch gekennzeichnet, daß das Fe(III)/Fe(II)-Verhältnis in der Mischfällung dasselbe ist, wie im erhaltenen Co-dotierten Magnetit. Damit bleibt das Fe(III)/Fe(II)-Verhältnis während der Reaktion konstant. Zum anderen bleibt der pH-Wert der Reaktionsmischung während der Reaktion unverändert. Die anfallenden Ferritpulver sind extrem feinteilig und besitzen, abhängig von den Reaktionsbedingungen, Teilchendurchmesser von etwa 60 bis 150 A; die spezifischen BET-Oberflächen der Pigmente liegen zwischen 100 und 300 m²/g. Diese bei pH=11—13 im stärker Alkalischen hergestellten extrem feinteiligen Produkte weisen bei Raumtemperatur einen mehr oder weniger hohen superparamagnetischen Anteil und kleine Werte für die relative Remanenz $m_r \equiv M_r/M_s$ auf (R. E. Vandenberghe, R. Vanleerberghe, E. De Grave und G. Robbrecht, J. Magn. Magn. Mater. *15—18* (1980), 1117—1118). Damit sind diese äußerst feinteiligen Pulver als Magnetpigmente für eine magnetische Speicherung ungeeignet. Wird das Neutralisationsverfahren mit einer Mischfällung durchgeführt, deren pH-Wert kleiner als 10.5 ist, so fällt Kobaltferrit in röntgenamorpher Form an und ist sogar völlig superparamagnetisch (T. Sato, M. Ugihara und M. Saito, Review of the Electrical Communication Laboratory *11* (1—2) (1963) 26—36). Erst durch eine aufwendige hydrothermale Nachbehandlung der

Kobaltferritpulver bei Temperaturen oberhalb 100°C und unter Überdruck gelingt es, Ferritpulver mit größeren Teilchendurchmessern und guten ferrimagnetischen Eigenschaften zu synthetisieren (W. J. Schuele und V. D. Deetscreek, J. Appl. Phys. *32* Suppl. (3) (1961) 235 S—236 S). Ein weiterer Nachteil des Neutralisationsverfahrens ist die schwierige Abtrennung der extrem feinteiligen, kolloidal anfallenden Pigmente durch Filtration und das langwierige Auswaschen der Filterkuchen. Hinzu kommt, daß sich beim Trocknen der Fällungspulver außerordentlich harte Massen bilden. Durch Pulverisieren ist es unmöglich, aus diesen harten Massen Ferritpulver mit guter Dispergierbarkeit herzustellen.

Bei dem zweiten Verfahren, den sogenannten Oxidationsverfahren, wird von einer Mischfällung mit einem definierten pH-Wert ausgegangen. Die Mischfällung wird durch Zusammengeben einer wäßrigen Alkalihydroxidlösung, einer Co-Salzlösung und einer Fe(II)-Salzlösung hergestellt. Diese wird aufgeheizt und mit einem oxidierenden Gas, i.a. mit Luft, solange oxidiert, bis ein kobalthaltiger Magnetit der Zusammensetzung

$$Co_xFe_{3-x}O_4 \equiv [Co(II)_xFe\text{-}(II)_{1-x}Fe(III)_2O_4] (0<x<1)$$

mit isotroper Teilchenform anfällt. Das Oxidationsverfahren ist dadurch gekennzeichnet, daß von einer Fe(III)-freien Mischfällung ausgegangen wird. Bei der Reaktion wird ein Teil des Fe(II) der Mischfällung zum Fe(III)-Anteil des anfallenden Ferritpulvers oxidiert. Dabei wird der Ausgangs-pH der Mischfällung zu kleineren Werten, d.h. ins Saure verschoben, wenn nicht während der Reaktion kontinuierlich Alkalihydroxidlösung zugegeben wird.

Es ist bekannt (US—PS 3.822.210), daß die Feinteiligkeit der erhaltenen Ferritpulver durch geeignete Wahl der Reaktionsparameter wie pH-Wert und Reaktionstemperatur in begrenztem Umfang variiert werden kann. Außerdem liegt unter bestimmten Reaktionsbedingungen ein Einfluß der Kobaltkonzentration x auf die erhaltene Pigmentfeinteiligkeit vor. Es hat sich jedoch außerdem gezeigt, daß es nach dem Oxidationsverfahren äußerst schwierig ist, kobalthaltige Magnetitpulver mit einem Teilchendurchmesser von kleiner 0,15 µm und einer spezifischen BET-Oberfläche von größer 12 $m^2/g$ herzustellen. Beim Einsatz technischer Eisen(II)-Chloridlösungen ergeben sich besondere Probleme zur Erzielung einer hohen Pigmentfeinteiligkeit. Ein besonderer Nachteil dieser Pigmentfeinteiligkeit ergibt sich bei der Herstellung rauscharmer magnetischer Informationsträger mit hoer Oberflächenglätte.

Aufgabe der vorliegenden Erfindung war es daher, ein Herstellungsverfahren bereitzustellen, das es auf kostengünstige Weise erlaubt, isotropen kobalthaltigen Magnetit und ein daraus resultierendes kobalthaltiges $\gamma$-$Fe_2O_3$ mit hoher Feinteiligkeit und mit dennoch hoher relativer Remanenz zu gewinnen.

Es wurde nun gefunden, daß sich feinteilige Ferritpulver der allgemeinen Formel

$$Co_xFe_{3-x}O_{4,5-0,5x}$$

mit Werten für x zwischen größer Null und kleiner 1, mit im wesentlichen isotroper Teilchenform durch trockene Oxidation von Ferritpulver der Zusammensetzung

$$(Fe^{III})[Co_xFe^{II}_{1-x}Fe^{III}]O_4$$

mit den gleichen Grenzen für x mit sauerstoffhaltigen Gasen bei 150 bis 500°C aufgabengemäß herstellen lassen, wenn das

$$(Fe^{III})[Co_xFe^{II}_{1-x}Fe^{III}]O_4\text{-Vorprodukt}$$

durch Einleiten eines sauerstoffhaltigen Gases in eine Mischfällung, hergestellt aus einer wäßrigen Alkalyhydroxid-, einer Kobaltsalz-, einer Eisen(II)- und einer Eisen(III)salzlösung, erzeugt wird, wobei das Eisen(III)-/Eisen(II)-Ionen-Verhältnis der Mischfällung kleiner ist als im resultierenden

$$(Fe^{III})/Co_xFe^{II}_{1-x}Fe^{III}/O_4\text{-Vorprodukt.}$$

Das erfindungsgemäße Verfahren unterscheidet sich vom Neutralisationsverfahren dadurch, daß das Fe(III)/Fe(II)-Verhältnis in der Ausgangsmischfällung nicht wie beim Neutralisationsverfahren dem Fe(III)/Fe(II)-Verhältnis im erhaltenen Ferritpulver entspricht. Beim erfindungsgemäßen Verfahren ist das Fe(III)-Fe(II)-Verhältnis in der Ausgangsmischfällung immer kleiner als im erhaltenen

$$(Fe^{III})[Co_xFe^{II}_{1-x}Fe^{III}]O_4\text{-Vorprodukt } (0<x<1).$$

Außerdem ist das erfindungsgemäße Verfahren mit der chemischen Umsetzung von gasförmigem Sauerstoff verknüpft, während das Neutralisationsverfahren unter Schutzgas und damit unter Ausschluß von oxidierenden Gasen durchgeführt wird. Weiterhin erhält man beim erfindungsgemäßen Verfahren Pigmente mit besonders guten ferrimagnetischen Eigenschaften, wenn bei einem pH-Wert von 6,0 bis 10,0 oxidiert wird, also in einem pH-Bereich, in dem bei Durchführung des Neutralisationsverfahrens völlig röntgenamorphe und superparamagnetische Produkte anfallen. Da nach dem erfindungsgemäßen Verfahren grobteiligere Pigmente erhalten werden als nach dem Neutralisationsverfahren, treten beim

erfindungsgemäßen Verfahren keine Filtrations- und Auswaschprobleme wie beim Neutralisationsverfahren auf.

Vom Oxidationsverfahren unterscheidet sich das erfindungsgemäße Verfahren dadurch, daß beim Oxidationsverfahren von einer Alkalihydroxid-, Co(II)-Salz- und Fe(II)-salzhaltigen Mischfällung ohne Fe(III)-Salzanteil ausgegangen wird, während beim erfindungsgemäßen Verfahren von einer Fe(III)-salzhaltigen Mischfällung ausgegangen wird. Bei der Durchführung des erfindungsgemäßen Verfahrens hat es sich überraschenderweise gezeigt, daß mit steigendem Fe(III)-Anteil der Mischfällung die Feinteiligkeit des erhaltenen kobalthaltigen Magnetits

$$(Fe^{III})[Co_xFe^{II}_{1-x}Fe^{III}]O_4 \ (0<x<1)$$

und damit auch die Feinteiligkeit des nach der trockenen Oxidation anfallenden kobalthaltigen

$$\gamma\text{-}Fe_2O_3=[Co_xFe_{3-x}O_{4.5-0.5x}] \ (0<x<1)$$

zunimmt. Mit zunehmendem Fe(III)-Anteil in der Mischfällung sinkt der Partikeldurch messer von etwa 0,15 µm auf etwa 0,02 µm. Die entsprechenden Pigmente weisen spezifische BET-Oberflächen von etwa 12 bis 100 $m^2/g$ auf. Damit lassen sich nach dem erfindungsgemäßen Verfahren deutlich feinteiligere Pigmente herstellen, als dies nach dem Oxidationsverfahren möglich ist. Zusätzlich zur Erhöhung der Pigmentfeinteiligkeit wird durch einen nicht zu hohen Fe(III)-Anteil in der Ausgangsmischfällung in nicht vorhersehbarer und überraschender Weise bei konstantem Co/Fe-Verhältnis die Koerzitivfeldstärke des nach der trockenen Oxidation erhaltenen kobalthaltigen Eisen(III)-Oxidpigments

$$[Co_xFe_{3-x}O_{4,5-0,5x}] \ (0<x<1)$$

erhöht. Der zur maximalen $H_c$-Steigerung erforderliche optimale Fe(III)-Anteil in der Ausgangsmischfällung und die erreichbare maximale $H_c$-Erhöhung ist vom eingestellten Co/Fe-Verhältnis abhängig. Damit ist zur Einstellung einer definierten Koerzitivfeldstärke im

$$Co_xFe_{3-x}O_{4,5-0,5x}\text{-Pigment}$$

ein geringerer Co-Gehalt erforderlich, wenn dieses nach dem erfindungsgemäßen Verfahren und nicht nach dem bekannten Oxidationsverfahren hergestellt wird, abgesehen davon, daß nach dem erfindungsgemäßen Verfahren feinteiligere Pigmente anfallen. Der geringere erforderliche Co-Anteil im Pigment ist zum einen wirtschaftlich vorteilhaft. Zum anderen wird durch einen geringeren Co-Anteil im Pigment in bekannter Weise die Temperaturabhängigkeit der Magnetwerte und die Magnetostriktion erniedrigt. Darüber hinaus ist die Schalftfeldverteilung der nach dem erfindungsgemäßen Verfahren hergestellten

$$Co_xFe_{3-x}O_{4,5-0,5x}\text{-Pigmente}$$

gegenüber den nach dem Oxidationsverfahren hergestellten Pigmenten in vorteilhafter Weise erniedrigt. Weiterhin zeigen die erhaltenen Pigmente in unerwarteter Weise eine engere Teilchengrößenverteilung, als die nach dem bekannten Oxidationsverfahren erhaltenen Magnetpigmente. Die enge Teilchengrößenverteilung ist mit der erhöhten Koerzitivfeldstärke und der erniedrigten Schaltfeldverteilung im Einklang.

Die erfindungsgemäß hergestellten isotropen ferrimagnetischen kobalthaltigen Eisenoxide, zeigen unerwartet vorteilhafte Eigenschaften bei der Verwendung als magnetische Materialien für die Herstellung von magnetischen Aufzeichnungsträgern. Zur Herstellung der magnetischen Schichten wird das ferrimagnetische Eisenoxid in polymeren Bindemitteln dispergiert. Als Bindemittel eignen sich für diesen Zweck bekannte Verbindungen, wie Homo- und Mischpolymerisate von Polyvinylderivaten, Polyurethanen, Polyestern und ähnliche. Die Bindemittel werden in Lösungen in geeigneten organischen Lösungsmitteln verwendet, die gegebenenfalls weitere Zusätze enthalten können. Die magnetischen Dispersionen werden auf starre oder biegsame Träger wie Platten, Folien oder Karten aufgebracht.

Die gemäß der Erfindung hergestellten isotropen, ferrimagnetischen Co-dotierten Eisenoxide unterscheiden sich bei gleichem Co/Fe-Verhältnis überraschenderweise deutlich von den bekannten, nach dem Neutralisationsverfahren erhaltenen isotropen kobalthaltigen Eisenoxiden durch ihre besseren ferrimagnetischen Eigenschaften, insbesondere durch ihre höhere Koerzitivfeldstärke, spezifische remanente Magnetisierung und relative Remanenz bzw. von den bekannten, nach dem Oxidationsverfahren erhaltenen kobalthaltigen Eisenoxiden durch ihre erhöhte Feinteiligkeit, erhöhte Koerzitivfeldstärke und engere Teilchengrößenverteilung. Diese Verbesserungen beim Magnetmaterial machen sich auch sehr deutlich bei den daraus hergestellten magnetischen Aufzeichnungsträgern bemerkbar. So führt beispielsweise die hohe Feinteiligkeit der gemäß der Erfindung hergestellten Pigmente zu magnetischen Medien mit einer hohen Oberflächenglätte und einem verringerten Teilchenrauschen ($RG_A$). Über das in erwünschter Weise verringerte Teilchenrauschen hinaus führen die

erfindungsgemäßen isotropen kobalthaltigen Eisenoxide zu einer Erhöhung und damit zu einer Verbesserung der Kopierdämpfung (Ko). Dies ist völlig unerwartet und überraschend, da bekanntermaßen eine Erhöhung der Pigmentfeinteiligkeit eine Erniedrigung und damit eine Verschlechterung der Kopierdämpfung nach sich zieht. Die Verbesserung der Kopierdämpfung muß auf das engere Teilchengrößenspektrum der erfindungsgemäßen Pigmente zurückgeführt werden.

Der Gegenstand der Erfindung wird anhand folgender Beispiele erläutert. Die Beispiele 1, 4 und 7 zeigen die Darstellung von kobalthaltigem Eisenoxid nach dem bekannten Oxidationsverfahren. In den Beispielen 2, 3, 5, 6, 8 und 9 wird die Darstellung von kobalthaltigem Eisenoxid nach dem erfindungsgemäßen Verfahren erläutert. Beispiel 10 beschreibt die Herstellung eines magnetischen Informationsträgers mit nach dem bekannten Oxidationsverfahren gewonnenem kobalthaltigem Eisenoxid. Die Beispiele 11 und 12 geben die Herstellung von erfindungsgemäßen magnetischen Informationsträgern wieder.

Beispiel 1 (Vergleichsversuch)

In einem 5 l-Rührgefäß wurde eine Lösung von 50,19 g $CoCl_2 . 6H_2O$ und 620,29 g $FeCl_2 . 4H_2O$ in 1,6 l $H_2O$ unter Rühren und unter Einleiten von reinem Stickstoff (200 l/h) solange mit wäßriger NaOH-Lösung und mit Wasser versetzt, bis ein pH von 7,5 und ein Gesamtvolumen von 4,0 l vorliegt. Anschließend wurde die Mischfällung auf 80°C aufgeheizt. Danach wurde der Stickstoffstrom abgestellt und stattdessen Luft (200 l/h) in die Mischfällung eingeleitet. Der pH-Wert der Reaktionsmischung wurde durch kontinuierliche Zugabe einer 2,5-molaren Natronlauge auf den eingestellten Wert von 7,5 konstant gehalten. Es wurde solange Luft eingeleitet, bis der Fe(II)-Gehalt der Reaktionsmischung konstant blieb. Nach Abkühlen der Dispersion wurde das angefallene Ferritpulver abfiltriert, ausgewaschen und getrocknet. Anschließend wurde der erhaltene kobalthaltige Magnetit der Zusammensetzung $Co_{0,19}Fe_{2,81}O_4$ mit isotroper Teilchenform eine Stunde lang bei 300°C mit Luft (100 l/h) in einem drehenden Quarzkolben oxidiert. Am erhaltenen isotropen kobalthaltigen Eisen(III)-Oxid der Zusammensetzung $Co_{0,19}Fe_{2,81}O_{4,405}$ wurden folgende Pigmenteigenschaften gemessen: $H_c$=66,9 kA/m, $M_r/\rho$=62 $nTm^3/g$, $m_r$=0,82, SFD (Schaltfeldverteilung)=0,43, $S_{N_2}$ (spez. BET-Oberfläche)=12,0 $m^2/g$.

Beispiel 2

In einem 5 l-Rührgefäß wurde eine Lösung von 50,19 g $CoCl_2 . 6H_2O$, 575,97 g $FeCl_2 . 4H_2O$ und 60,01 g $FeCl_3 . 6H_2O$ in 2,2 l $H_2O$ unter Rühren und unter Einleiten von reinem Stickstoff (200 l/h) so weiterbehandelt, wie in Beispiel 1 beschrieben. Die Reaktionszeit bei 80°C und pH=7,5 betrug 3 Stunden.

Am erhaltenen isotropen kobalthaltigen Eisen(III)-Oxid der Zusammensetzung $Co_{0,19}Fe_{2,81}O_{4,405}$ wurden folgende Pigmenteigenschaften gemessen:

$H_c$=76,6 kA/m, $M_r/\rho$=54 $nTm^3/g$, $m_r$=0,78, SFD=0,41, $S_{N_2}$=20,0 $m^2/g$.

Beispiel 3

In einem 5 l-Rührgefäß wurde eine Lösung von 50,19 g $CoCl_2 . 6H_2O$, 531,84 g $FeCl_2 . 4H_2O$ und 120,01 g $FeCl_3 . 6H_2O$ in 2,2 l $H_2O$ unter Rühren und unter Einleiten von reinem Stickstoff (200 l/h) so weiterbehandelt, wie in Beispiel 1 beschrieben. Die Reaktionszeit bei 80°C und pH=7,5 betrug 3 Stunden.

Am erhaltenen isotropen kobalthaltigen Eisen(III)-Oxid der Zusammensetzung $Co_{0,19}Fe_{2,81}O_{4,405}$ wurden folgende Pigmenteigenschaften gemessen:

$H_c$=67,4 kA/m, $M_r/\rho$=45 $nTm^3/g$, $m_r$=0,70, SFD=0,41, $S_{N_2}$=23,0 $m^2/g$.

Beispiel 4 (Vergleichsversuch)

Der in Beispiel 1 beschriebene Versuch wurde wiederholt. Anstelle der Reaktionstemperatur von 80°C wurde eine erhöhte Reaktionstemperatur von 90°C eingestellt.

Am erhaltenen isotropen kobalthaltigen Eisen(III)-Oxid der Zusammensetzung $Co_{0,19}Fe_{2,81}O_{4,405}$ wurden folgende Pigmenteigenschaften gemessen:

$H_c$=59,5 kA/m, $M_r/\rho$=65 $nTm^3/g$, $m_r$=0,81, SFD=0,44, $S_{N_2}$=9,6 $m^2/g$.

Beispiel 5

Der in Beispiel 2 beschriebene Versuch wurde wiederholt. Anstelle der Reaktionstemperatur von 80°C wurde wie in Beispiel 4 eine Reaktionstemperatur von 90°C eingestellt.

Am erhaltenen isotropen kobalthaltigen Eisen(III)-Oxid der Zusammensetzung $Co_{0,19}Fe_{2,81}O_{4,405}$ wurden folgende Pigmenteigenschaften gemessen:

$H_c$=64,3 kA/m, $M_r/\rho$=52 $nTm^3/g$, $m_r$=0,75, SFD=0,42, $S_{N_2}$=18,0 $m^2/g$.

Beispiel 6

Der in Beispiel 3 beschriebene Versuch wurde wiederholt. Anstelle der Reaktionstemperatur von 80°C wurde wie in Beispiel 4 eine Reaktionstemperatur von 90°C eingestellt.

Am erhaltenen isotropen kobalthaltigen Eisen(III)-Oxid der Zusammensetzung $Co_{0,19}Fe_{2,81}O_{4,405}$ wurden folgende Pigmenteigenschaften gemessen:

$H_c$=59,9 kA/m, $M_r/\rho$=46 $nTm^3/g$, $m_r$=0,70, SFD=0,44, $S_{N_2}$=25,8 $m^2/g$.

Beispiel 7 (Vergleichsversuch)

In einem 5 l-Rührgefäß wurde eine Lösung von 50,19 g $CoCl_2 . 6H_2O$ in 1,2 l $H_2O$ unter Rühren und unter Einleiten von reinem Stickstoff (200 l/h) mit 974,01 ml einer technischen Eisen(II)-Chloridlösung der Konzentration 40,6 g $FeCl_2$/100 ml vermischt. Die erhaltene Lösung wurde mit wäßriger NaOH-Lösung und mit Wasser versetzt, bis ein pH von 6,8 und ein Gesamtvolumen von 4,0 l vorliegt. Anschließend wurde wie in Beispiel 4 beschrieben weiterverfahren. Die Reaktionszeit bei 90°C und pH=6,8 betrug 5 Stunden.

Am erhaltenen isotropen kobalthaltigen Eisen(III)-Oxid der Zusammensetzung $Co_{0,19}Fe_{2,81}O_{4,405}$ wurden folgende Pigmenteigenschaften gemessen:

$H_c$=53,9 kA/m, $M_r/\rho$=58 $nTm^3/g$, $m_r$=0,79, SFD=0,53, $S_{N_2}$=8,7 $m^2/g$.

Beispiel 8

In einem 5 l-Rührgefäß wurde eine Lösung von 50,19 g $CoCl_2 . 6H_2O$ in 1,2 l $H_2O$ unter Rühren und unter Einleiten von reinem Stickstoff (200 l/h) mit 972,4 ml einer technischen Eisen(II)-Chloridlösung der Konzentration 39,2 g $FeCl_2$/100 ml und mit 27,09 ml einer technischen Eisen(III)-Chloridlösung der Konzentration 66,48 g $FeCl_3$/100 ml vermischt. Die erhaltene Lösung wurde wie in Beispiel 7 beschrieben weiterbehandelt. Die Reaktionszeit bei 90°C und pH=6,8 betrug 4 Stunden.

Am erhaltenen isotropen kobalthaltigen Eisen(III)-Oxid der Zusammensetzung $Co_{0,19}Fe_{2,81}O_{4,405}$ wurden folgende Pigmenteigenschaften gemessen:

$H_c$=70,1 kA/m, $M_r/\rho$=53 $nTm^3/g$, $m_r$=0,75, SFD=0,50, $S_{N_2}$=16,0 $m^2/g$.

Beispiel 9

In einem 5 l-Rührgefäß wurde eine Lösung von 50,19 g $CoCl_2 . 6H_2O$ in 1,2 l $H_2O$ unter Rühren und unter Einleiten von reinem Stickstoff (200 l/h) mit 936,92 ml einer technischen Eisen(II)-Chloridlösung der Konzentration 39,2 g $FeCl_2$/100 ml und mit 54,17 ml einer technischen Eisen(III)-Chloridlösung der Konzentration 66,48 g $FeCl_3$/100 ml vermischt. Die erhaltene Lösung wurde wie in Beispiel 7 beschrieben weiterbehandelt. Die Reaktionszeit bei 90°C und pH=6,8 betrug 4 Stunden.

Am erhaltenen isotropen kobalthaltigen Eisen(III)-Oxid der Zusammensetzung $Co_{0,19}Fe_{2,81}O_{4,405}$ wurden folgende Pigmenteigenschaften gemessen:

$H_c$=71,6 kA/m, $M_r/\rho$=47 $nTm^3/g$, $m_r$=0,71, SFD=0,46, $S_{N_2}$=21,3 $m^2g$.

Beispiel 10 (Vergleichsversuch)

Zur Herstellung eines magnetischen Informationsträgers wurde in einer 250 $cm^3$-Glasflasche ein Ansatz folgender Zusammensetzung hergestellt:

50 g eines nach Beispiel 1 hergestellten Magnetpigments mit einer spezifischen Oberfläche nach BET von 12.0 $m^2/g$, 18,8 g eines Lösungsmittelgemisches von gleichen Anteilen Tetrahydrofuran und Dioxan, 12,5 g einer 20 %igen Lösung eines Copolymers von Vinylchlorid, Dimethylmaleinat und Diethylmaleinat (80:10:10) mit einem K-Wert von 60 in oben genanntem Lösungsmittelgemisch, 12,8 g einer 13 %igen Lösung eines Polyesterpolyurethans vom K-Wert 60, hergestellt aus einem Polyester aus Butandiol und Adipinsäure, Butandiol, Trimethylolpropan und Diphenylmethandiisocyanat ebenfalls in obigem Lösungsmittelgemisch und 3 g eines handelsüblichen, anionaktiven Dispergierhilfsmittels auf Basis eines oxethylierten Phosphorsäureesters.

Dieser Ansatz wurde zusammen mit 100 $cm^3$ Stahlkugeln ($\theta$=2 mm) 3 Stunden mittels einer Schüttelkugelmühle dispergiert. Anschließend wurden 37,85 g der letztgenannten Bindemittellösung, 5 g des o.g. Lösungsmittelgemisches und 0,5 g Isostearinsäure hinzugegeben und weitere 0,5 Stunden dispergiert. Nach Abtrennung der Kugeln und Filtration durch einen 5 µm Porenfilter wurde die Dispersion mittels eines Linealgießers auf eine 12 µm dicke Polyethylenterephthalatfolie aufgetragen, ohne magnetische Ausrichtung getrocknet und mit auf 70°C beheizten Walzen kalandriert. Die Dicke der so erhaltenen magnetisierbaren Schicht betrug 5 µm.

Nach Herstellung eines 3.81 mm breiten Bandstückes wurde dieses auf einem handelsüblichen Laufwerk mit einem Magnetkopf mit 2.5 µm Spaltbreite gemäß DIN 45 401, 45 403, 45 512 B1. 12 geprüft. Bei einer Bandremanenz von 141 mT wurde gegenüber dem IEC II-Bezugsband eine Kopierdämpfung (Ko) von −5,8 dB und ein Rauschen ($RG_A$) von −0,2 dB gemessen.

Beispiel 11

Es wurde wie in Beispiel 10 beschrieben vorgegangen, jedoch wurde ein erfindungsgemäß gemäß Beispiel 2 hergestelltes Magnetpigment mit einer spezifischen Oberfläche von 20,0 $m^2/g$ eingesetzt. Die in gleicher Weise gemessenen Ergebnisse sind:

Bandremanenz=123 mT,
Ko=+8 dB,
$RG_A$=+3 dB.

Beispiel 12

Es wurde wie in Beispiel 10 beschrieben vorgegangen, jedoch wurde ein erfindungsgemäß gemäß

Beispiel 3 hergestelltes Magnetpigment mit einer spezifischen Oberfläche von 23,0 $m^2/g$ eingestezt. Die in gleicher Weise gemessenen Ergebnisse sind:

Bandremanenz=113 mT,
Ko=+8.3 dB,
$RG_A$=+5.1 dB.

**Patentansprüche**

1. Verfahren zur Herstellung von feinteiligem kobalthaltigem Ferritpulver der allgemeinen Formel

$$Co_xFe_{3-x}O_{4,5-0,5x}$$

mit Werten für x zwischen größer Null und kleiner 1, mit im wesentlichen isotroper Teilchenform durch trockene Oxidation von Ferritpulver der Zusammensetzung

$$(Fe^{III})[Co_xFe^{II}_{1-x}Fe^{III}]O_4$$

mit den gleichen Grenzen für x mit sauerstoffhaltigen Gasen bei 150 bis 500°C, dadurch gekennzeichnet, daß das

$$(Fe^{III})[Co_xFe^{II}_{1-x}Fe^{III}]O_4\text{-Vorprodukt}$$

durch Einleiten eines sauerstoffhaltigen Gases in eine Mischfällung, hergestellt aus einer wäßrigen Alkalihydroxid-, einer Kobaltsalz-, einer Eisen(II)- und einer Eisen(III)-salzlösung, erzeugt wird, wobei das Eisen(III)-/Eisen(II)-Ionen-Verhältnis der Mischfällung kleiner ist als im resultierenden

$$(Fe^{III})[Co_xFe^{II}_{1-x}Fe^{III}]O_4\text{-Vorprodukt.}$$

2. Verfahren nach Anspruch 1, dadurch gekennzeichnet, daß die Oxidation der Mischfällung durch Einleiten eines sauerstoffhaltigen Gases bei einem konstanten pH-Wert im pH-Bereich von 6.0 bis 10.0 erfolgt.

3. Verfahren nach Anspruch 1, dadurch gekennzeichnet, daß als Alkalihydroxid Natriumhydroxid oder Kaliumhydroxid verwendet wird.

4. Verfahren nach Anspruch 1, dadurch gekennzeichnet, daß das in die Mischfällung eingeleitete sauerstoffhaltige Gas Luft ist.

5. Verwendung der gemäß Anspruch 1 bis 5 hergestellten isotropen ferrimagnetischen Ferritpulver zur Herstellung von magnetischen Aufzeichnungsträgern.

**Revendications**

1. Procédé de préparation de poudre de ferrite à teneur en cobalt, finement divisée, de la formule générale

$$Co_xFe_{3-x}O_{4,5-0,5x}$$

à valeurs de x entre plus que zéro et moins que 1, par oxydation à sec de poudre de ferrite de la composition

$$(Fe^{III})[Co_xFe^{II}_{1-x}Fe^{III}O_4,$$

ayant les mêmes limites pour x, avec des gaz oxygénés, de 150 à 500 degrés C, caractérisé par le fait que le produit intermédiaire

$$(Fe^{III})[Co_xFe^{II}_{1-x}Fe^{III}O_4$$

est obtenu en faisant passer un gaz oxygéné dans un coprécipité préparé à partir d'une solution d'hydroxyde alcalin aqueuse, de sel de cobalt, de sel de fer (II) et de sel de fer (III), le rapport entre les ions de fer (III) et de fer (II) dans le coprécipité étant plus petit que dans le produit intermédiaire

$$(Fe^{III})[Co_xFe^{II}_{1-x}Fe^{III}O_4.$$

2. Procédé selon la revendication 1, caractérisé par le fait que l'oxydation du coprécipité est effectuée par le passage d'un gaz oxygéné à un pH constant dans une zone de pH de 6,0 à 10,0.

3. Procédé selon la revendication 1, caractérisé par le fait qu'on utilise, comme hydroxyde alcalin, de l'hydroxyde de sodium ou de potassium.

4. Procédé selon la revendication 1, caractérisé par le fait que le gaz oxygéné qu'on fait passer dans le coprécipité est de l'air.

5. Utilisation de la poudre de ferrite ferrimagnétique isotrope préparée selon la revendication 1 à 5 pour la fabrication de supports d'enregistrement magnétique.

**Claims**

1. A process for the preparation of a finely divided cobalt-containing ferrite powder of the formula

$$Co_xFe_{3-x}O_{4.5-0.5x}$$

where x is from greater than zero to less than 1, having an essentially isotropic particle shape, by dry oxidation of ferrite powder of the composition

$$(Fe^{III})[Co_xFe^{II}_{1-x}Fe^{III}]O_4,$$

where x has the same limits, with an oxygen-containing gas at from 150 to 500°C, wherein the

$$(Fe^{III})[Co_xFe^{II}_{1-x}Fe^{III}]O_4$$

intermediate is produced by passing an oxygen-containing gas into a coprecipitate prepared from an aqueous alkali metal hydroxide solution, a cobalt salt solution, an iron(II) salt solution and an iron(III) salt solution, the ratio of iron(III) ions to iron(II) ions in the coprecipitate being smaller than that in the resulting

$$(Fe^{III})[Co_xFe^{II}_{1-x}Fe^{III}]O_4$$

intermediate.

2. A process as claimed in claim 1, wherein the oxidation of the coprecipitate is carried out by passing in an oxygen-containing gas at a constant pH from 6.0 to 10.0.

3. A process as claimed in claim 1, wherein sodium hydroxide or potassium hydroxide is used as the alkali metal hydroxide.

4. A process as claimed in claim 1, wherein the oxygen-containing gas passed into the coprecipitate is air.

5. The use of an isotropic ferrimagnetic ferrite powder prepared according to any of claims 1 to 5 for the production of magnetic recording media.